# EUROPEAN PATENT APPLICATION

(11) **EP 1 916 309 A2**
(43) Date of publication of application: **30.04.2008**
(21) Application number: 07254257.4
(22) Date of filing: 26.10.2007
(51) Int. Cl.: C12Q 1/00, G01N 33/487

(54) **Surface treatment of carbon composite material to improve electrochemical properties**

(30) Priority: 27.10.2006 US 553547
(71) Applicant: Lifescan Scotland Limited, Inverness-Shire IV2 3ED (GB)
(72) Inventor: Alvarez-Icaza, Manuel, Inverness-shire IV2 4AL (GB); Griffith, Alun, Inverness-shire IV2 3XQ (GB); Mills, Leanne, Inverness-shire IV2 6XA (GB); Steele, Dominic, Inverness-shire IV2 6XA (GB)
(74) Representative: Tunstall, Christopher Stephen

(57) **Abstract**

The invention described herein includes a screen printing process for depositing carbon electrodes including a method for selectively removing components that degrade the electrochemical performance from the surface of said carbon electrodes. The process includes applying a corona treatment to the carbon electrodes.

## Description

### BACKGROUND OF THE INVENTION

### 1. Field of the Invention

The present invention relates in general, to disposable test strips for use in the electrochemical determination of analytes, such as glucose, in body fluids such as blood or interstitial fluid, and more particularly to a method of manufacturing such test strips to improve electrochemical properties.

### 3. Problem to be Solved

Glucose monitoring is a fact of everyday life for people with diabetes, and the accuracy of such monitoring can literally mean the difference between life and death. Frequent testing of blood sugar levels is required for a person with diabetes to live a normal lifestyle and a number of glucose meters are commercially available to accommodate this need. Many glucose-monitoring meters detect glucose in a blood sample electrochemically, by detecting the oxidation of blood glucose using an enzyme such as glucose oxidase provided as part of a disposable, single-use electrode system. Alternative methods of glucose measurement are available such as, for example, photometric testing.

Test strips for use in electrochemical glucose meters typically comprise a substrate material, working and reference electrodes formed on the surface of the substrate, and a means for making connection between the electrodes and the meter. The working electrode is typically coated with an enzyme capable of oxidizing glucose and a mediator compound. The mediator compound transfers electrons from the enzyme to the electrode, resulting in a measurable current when glucose is present. Representative mediator compounds include ferricyanide, ruthenium, metallocene compounds such as ferrocene, quinines, phenazinium salts and imidazole-substituted osmium compounds.

Working electrodes of this type have been formulated in a number of ways. For example, the required components may be formulated into a paste or ink and applied to the substrate using a screen-printing technique in order to obtain thin layers suitable for disposable test strips.

The carbon ink used as the base for electrochemical test sensors such as the OneTouch® Ultra brand from Lifescan, Inc., Milpitas, California, USA for example, is typically composed of a mixture of graphite, carbon black and a polymer to bind them together. Before printing the ink, the graphite, carbon black and polymer may be dispersed in a solvent to keep the ink fluid and prevent it from separating and/or drying out. As part of the manufacturing process, the solvent is removed by heating the mixture to temperatures in the range 120 to 160 degrees C. Removal of the solvent transforms the liquid ink into a paste that will reliably adhere to the substrate.

For electrochemical test sensors, the actual electrochemistry takes place at the surface of the carbon black and graphite particles. When the solvent is removed, this process brings together the carbon black and graphite particles, thereby decreasing the electrical resistance of the electrode. However, the resulting electrode may not have a surface of the clean carbon. It is very possible that the surface is composed of carbon black and graphite particles covered in a thin polymer layer or other contaminants produced by the exposure of the carbon particles to high concentrations of solvent and polymers during the drying process. Conventional screen printing techniques therefore often result in carbon electrodes exhibiting reduced electrochemical properties i.e. that do not facilitate efficient exchange of electrons at the electrode surface.

This problem may be enhanced by integrating screen printing as part of a web manufacturing process, as screen printing produces a very thin electrode layer. It would, therefore, be advantageous to develop a screen printing process for depositing carbon electrodes including a method for selectively removing components that degrade the electrochemical performance from the surface of said carbon electrodes.

### SUMMARY OF THE INVENTION

The present invention is directed to a method of manufacturing test sensors for use in the detection or measurement of body fluid analytes, such as blood glucose. In one embodiment, the method includes providing an insulating substrate, applying a layer of carbon composite ink onto the insulating substrate to form one or more electrodes, treating exposed surface areas of carbon, insulation and substrate with high energy density corona discharge, the corona discharge having an energy density sufficient to improve the electrochemical properties of the test sensor by selectively removing polymer resin from the surface of the carbon composite electrodes and depositing the enzyme ink over a defined region of the printed substrate.

The present invention is further directed to a method of manufacturing test sensors for use in the detection or measurement of body fluid analytes, such as blood glucose. In one embodiment of the invention, the method includes providing an insulating substrate, applying a layer of carbon composite ink onto the insulating substrate to form one or more electrodes, treating exposed surface areas of carbon, insulation and substrate with high energy density corona discharge, the corona discharge having an energy density sufficient to increase the hydrophilicity of the surface of the carbon composite electrodes, and depositing the enzyme ink over a defined region of the printed substrate. In a further embodiment of the present invention, the corona discharge is adapted to remove an insulating polymer from the surface of the electrode. In a further embodiment of the invention, the substrate forms part of a continuous web of substrate. In the further embodiment of the present invention the corona discharge forms a blanket treatment across the printed substrate.

In a further embodiment of the present invention, the method includes selectively increasing the hydrophilicity of a screen-printed substrate. In this embodiment of the present invention, the method includes printing a layer of conductive electrode material onto a web of substrate, printing a layer of insulation ink over the electrode layer, applying high energy density corona discharge to exposed regions of electrode, insulation and bare substrate materials, depositing enzyme ink over a predefined region of corona treated electrode, insulation and substrate materials, and applying a layer of adhesive material to form a capillary channel.

In a further embodiment of the present invention, the method of improving the electrochemical properties of a test sensor includes: providing a substrate, applying a layer of carbon composite material on the substrate forming at least one electrode, applying a layer of insulation ink over a defined region of carbon electrode layer and substrate, treating the test sensor with corona discharge, applying a layer of enzyme ink, applying a layer of adhesive material to substantially form a capillary channel, wherein the corona treatment is adapted to selectively remove a component of the carbon composite material from the surface thereof. In a further embodiment of the present invention, the component is an insulating polymer.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

Figure 1 is an exploded view of a commercially available test strip;

Figure 2 is a flow diagram of the steps involved in preparing and printing a carbon ink layer;

Figure 3 is a close-up cross-section view through a printed carbon electrode layer without any surface treatment;

Figure 4 is a simplified box diagram of a web manufacturing process incorporating corona discharge equipment, according to the present invention.

Figure 5 is a flow diagram of the main process steps involved in continuous web printing of test sensors, including corona treatment according to the present invention;

Figure 6 is a perspective view of example equipment for use in corona treatment of printed substrate as part of a continuous web printing process according to the present invention;

Figure 7 is a top plan view of a partially printed test sensor that is corona treated during the continuous web printing process of Figures 4 and 5, according to the present invention;

Figure 8 is a simplified cross-section view through the continuous web printing apparatus of Figure 6, showing an example corona treatment apparatus incorporating a single pointed and flat electrode;

Figure 9 is a simplified cross-section view through the continuous web printing apparatus of Figure 6 showing a further example of a corona treatment apparatus incorporating a plurality of pointed electrodes;

Figure 10 is a close-up perspective view of the surface of a printed carbon layer with corona discharge surface treatment, according to the present invention;

Figure 11 is a top plan view of the test sensor of Figure 7 including the enzyme layer;

Figure 12 is a flow diagram of the main post-web printing processes involved in the manufacture of test sensors, including laying down of adhesive to form a capillary channel;

Figure 13 is a top plan view of the test sensor of Figures 7 and 11 now including the adhesive layer;

Figure 14 is a plot of polarization curves comparing printed carbon electrodes with and without corona treatment, according to the present invention.

### DETAILED DESCRIPTION OF ILLUSTRATIVE EMBODIMENTS OF THE INVENTION

While preferred embodiments of the present invention have been shown and described herein, it will be obvious to those skilled in the art that such embodiments are provided by way of example only. Numerous variations, changes, and substitutions will now occur to those skilled in the art without departing from the invention.

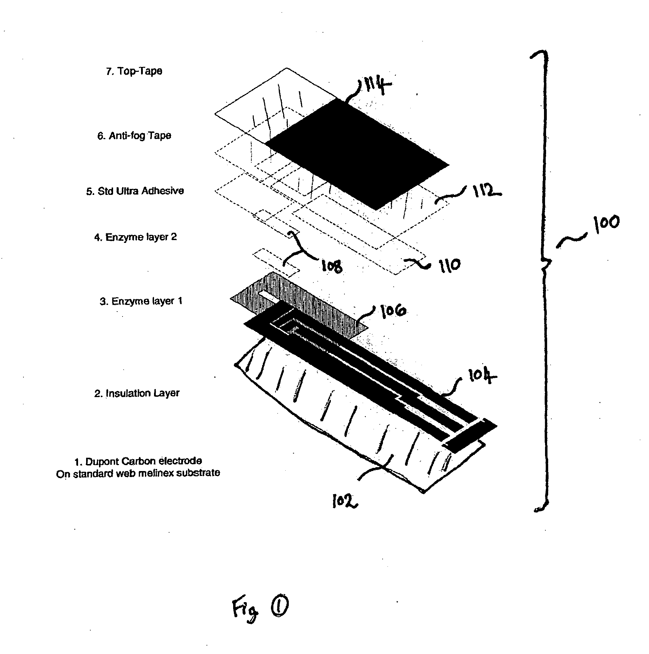

**Figure 1** is an exploded perspective view of a commercially available test sensor 100 including a base substrate 102, an electrode layer 104, an insulation layer 106, enzyme layers 108, an adhesive layer 110, a layer of hydrophilic film 112 and a cover layer 114.

Test sensors used in the measurement of analytes or indicators are commonly known in the art. For example, the OneTouch Ultra test sensors, available from LifeScan Inc., Milpitas, California, used in the measurement blood glucose, which are fully described in patent numbers US6241862B1, EP1155310B1, EP1261868B1 and patent application US2003/0217918A1, the contents of which are fully incorporated herein by reference.

The example test sensor 100 of Figure 1 is shown in isolation however in practice an array of test sensors may be screen-printed in card format, each card typically comprising 500 test sensors, or preferably manufactured using a continuous web printing process, whereby the equivalent of approximately 2000 cards of test sensors are screen-printed per batch on a continuous web of substrate material. The continuous web printing apparatus is described in detail in patent applications W02004/040287A1 and W02004/039600A2 (both filed October 30, 2003 by the same applicant).

Patent application WO2004/039898A1 describes an ink composition and method for use thereof in the manufacturing of electrochemical sensors, the entire content of which is fully incorporated herein by reference. Electrochemical sensors according to WO2004/039898A1 can be used as a biosensor for the analytical determination of blood glucose, wherein a current is measured at a constant potential and the magnitude of the measured current is indicative of the glucose concentration. The resulting current can be linearly calibrated to output an accurate glucose concentration. A method of calibrating electrochemical glucose biosensors is to define multiple calibration codes within a calibration space, in which a particular calibration code is associated with a discrete slope and intercept pair. For a particular lot of electrochemical sensors, a measured current output may be mathematically transformed into an accurate glucose concentration by subtracting an intercept value from the measured current output and then dividing by the slope value. The measured current output, slope and intercept values can be influenced by the electrochemical surface area, overpotential for oxidizing a redox mediator, as well as the stability, resistance and capacitance of the carbon layer that serves as the electrochemical sensor electrode.

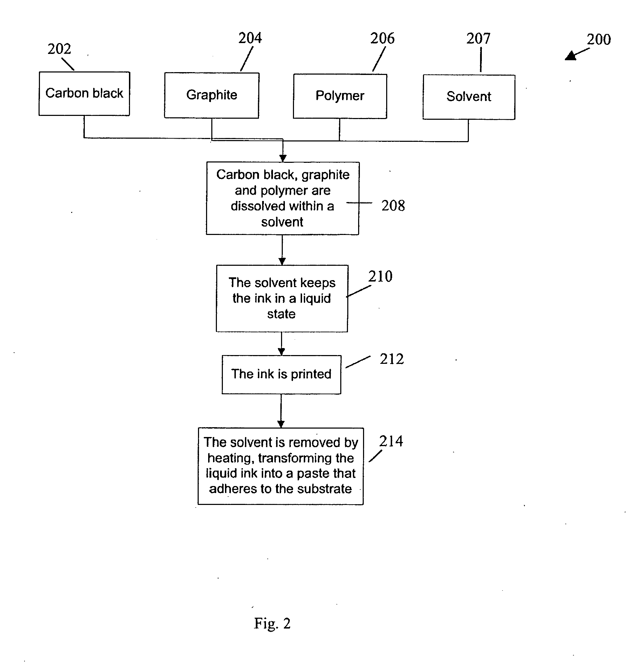

**Figure 2** is a flow diagram 200 of the main steps involved in preparing and printing electrode layer 104 of Figure 1. Firstly, carbon black 202 and graphite 204 are mixed together with a polymer 206 and a solvent 207, step 208. Solvent 207 keeps the ink in a liquid state, step 210. Dispersing the components in a solvent such as Isopherone for example, allows batches of carbon ink to be prepared in advance, and may be kept dispersed in the solvent for up to several months prior to use. Examples of a suitable carbon black include, but is not limited to Vulcan XC-72 (available from Cabot) or Conductex 975B (available from Sevalco). Suitable graphites include, but are not limited to Timrex KS15 carbon (available from G & S Inorganics). Further examples are provided in W02004/039898A1.

After a batch of carbon ink is printed, step 212, the solvent 207 is removed by heating the liquid ink to temperatures in the range of 120 to 160 degrees, step 214. As the solvent evaporates at the exposure temperature, the carbon black, graphite and polymer particles, which were previously well dispersed in the solvent, are forced to come together as the material shrinks thereby decreasing the electrical resistance of the carbon composite ink. Removal of the solvent transforms the liquid ink into a paste that reliably adheres to substrate material 102, step 214.

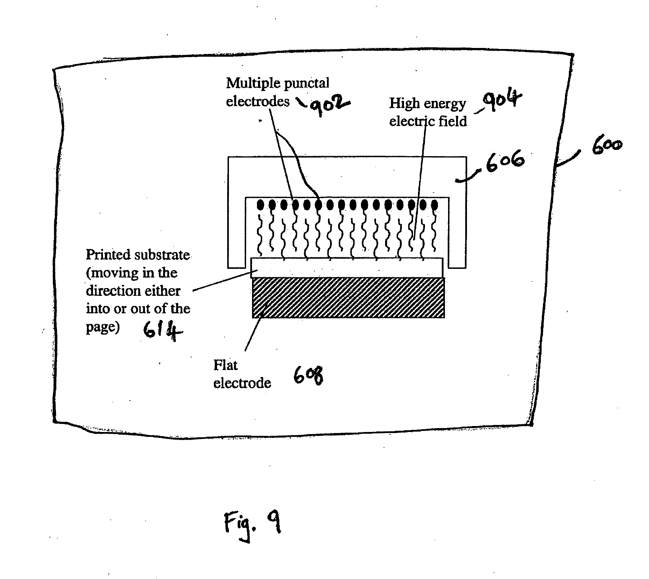

It will be apparent to a person skilled in the art that a variety of ink compositions can be utilized in the process of manufacturing electrochemical sensors, particularly those that provide beneficial electrochemical and physical characteristics e.g. electrochemical surface area, resistance, capacitance and stability, while also being compatible with relatively high-speed continuous web processing techniques as will be described in relation to Figure 4.

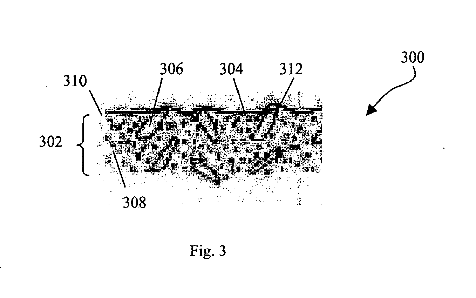

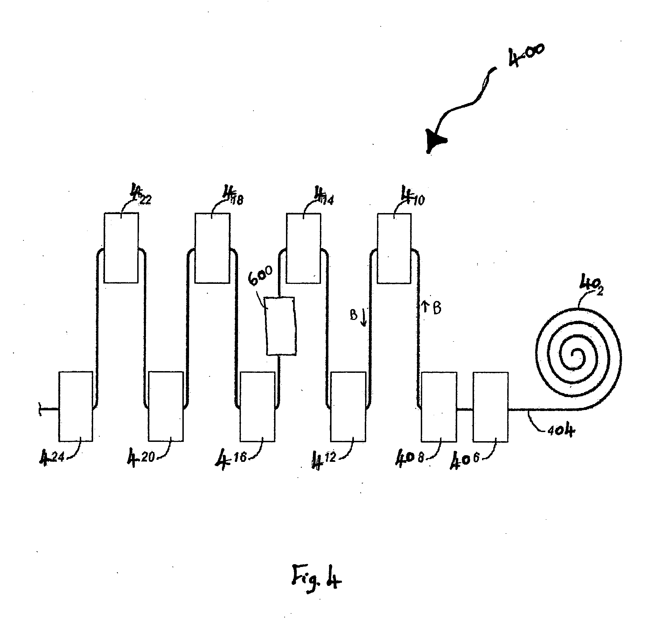

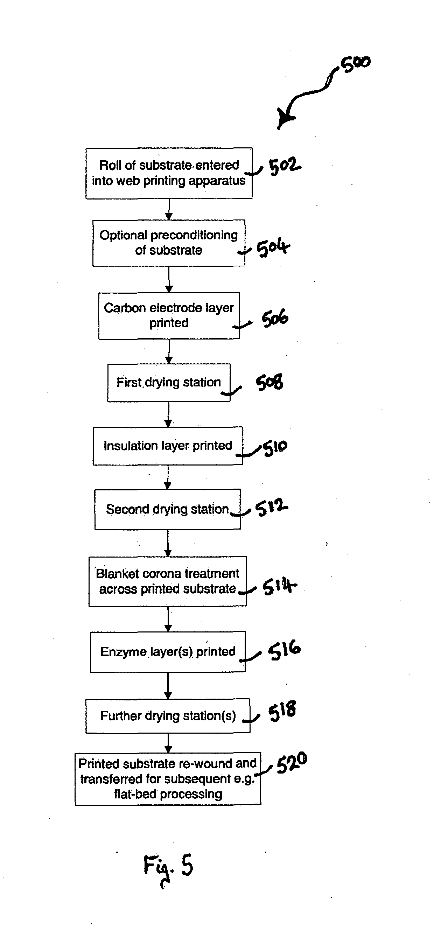

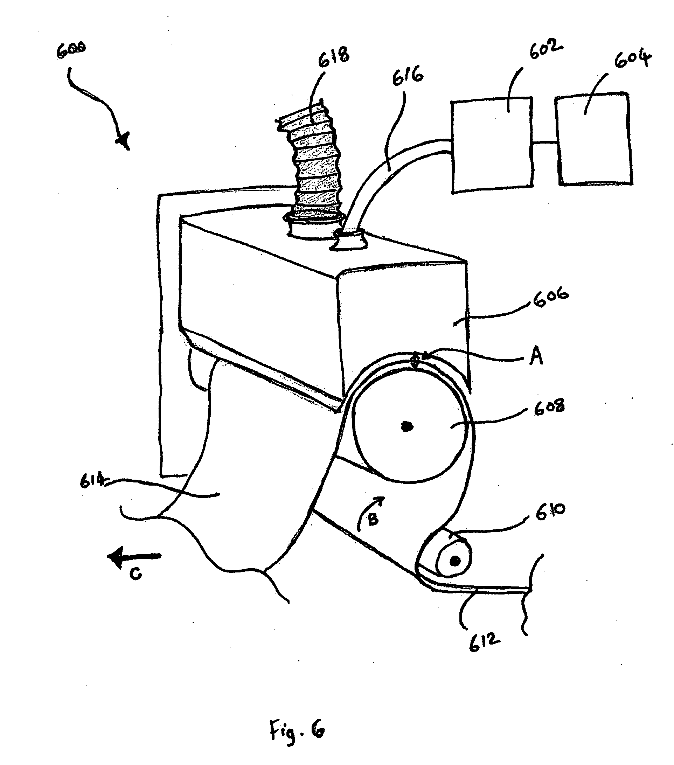

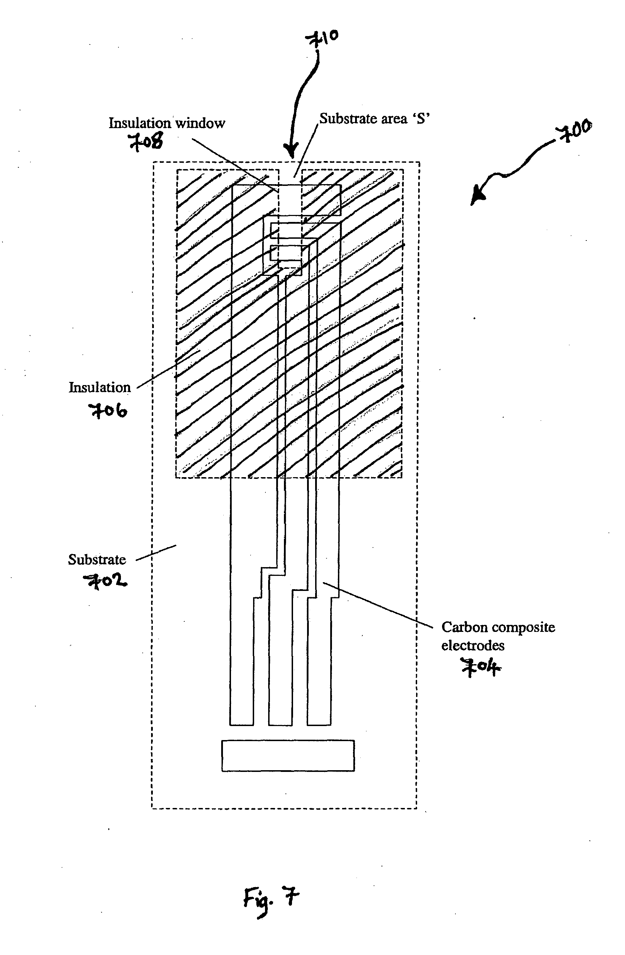

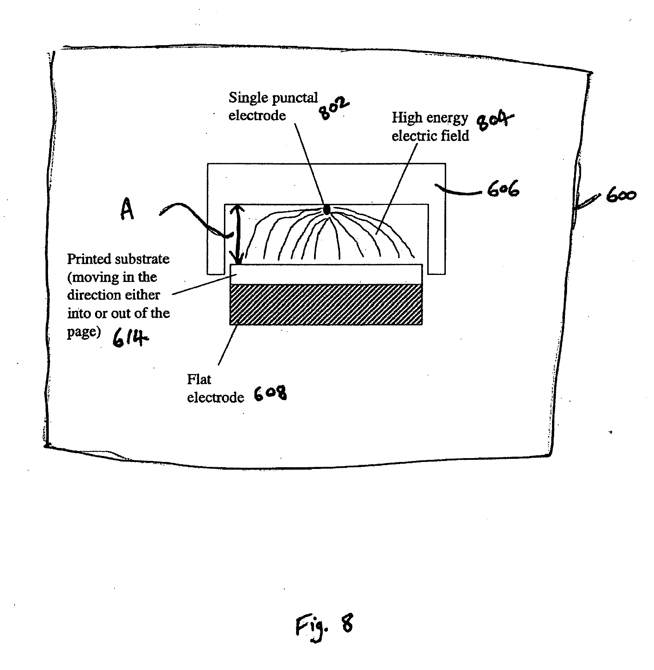

**Figure 3** is a close-up cross-section view 300 through a printed carbon electrode layer 302 without any surface treatment, including carbon black particles 304, graphite particles 306, a polymer resin 308 and a thin film 312 of polymer 308 at the surface 310 of electrode 302.

For an ink composition to be compatible with high-speed continuous web processing techniques, the ink composition should be dryable in a drying duration that does not limit the speed of the continuous web process e.g. a drying duration in the range 30 to 60 seconds. Such a short drying duration requires application of quite harsh drying conditions e.g. the use of 140 °C air at a velocity of 60 m³/minute. The combination of severe drying conditions and conventional ink compositions i.e. a carbon, graphite and polymer composite, can result in the formation of an electrode (e.g. a carbon electrode) with poor electrochemical properties.

Figure 3 shows a cross-section 300 through a screen-printed carbon electrode that has not received any surface treatment such as item 104 of Figure 1, showing carbon 304 and graphite 306 particles entrained within a polymer resin 308. Polymer 308 is required to bind carbon particles 304 and graphite particles 306 together to provide the required conductive properties. Use of a polymer 308 can however compromise the electrochemical properties of analyte test sensors as screen-printing with a carbon composite ink formulation may result in deposition of a thin film 312 of polymer 308 over the conductive carbon 304 and graphite 306 components at the surface 310 of the printed electrode layer 302.

The electrochemical reaction of electrochemical test sensors (electron transfer) occurs at the surface 310 of conductive electrodes 302, therefore the presence of a thin film 312 of polymer 308 over the carbon 304 and graphite 306 components can be inhibitory to the electron exchange properties of these elements. Thin film 312 may reduce the effectiveness of the surface exchange electrons and decrease the ability of the test sensor to respond accurately to glucose concentrations particularly in low temperature conditions. It is therefore an aim of the present invention to incorporate a surface treatment process to substantially remove thin film 312 of polymer 308 from the active surfaces of carbon 304 and graphite 306 components in order to improve the electrochemical properties of conductive electrode 302.

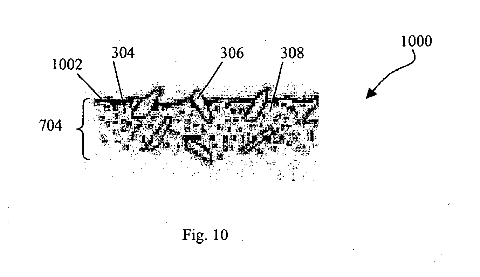

**Figure 4** is a simplified box diagram showing the general layout of a continuous web printing apparatus 400 incorporating corona discharge surface treatment equipment according to the present invention, including an unwinder unit 402, a substrate 404, a preconditioning station 406, an electrode print station 408, a first dryer 410, an insulation print station 412, a second dryer 414, a corona treatment unit 600 (described in detail in relation to Figure 6), a first enzyme print station 416, a third dryer 418, a second enzyme print station 420, a fourth dryer 422, a rewinder roller 424 and arrows 'B' to again indicate the direction of travel of substrate 404. It will be apparent to a person skilled in the art that while the following description relates to a process and apparatus concerning the number of stations outlined, the number of stations can however be any number and will depend on the number of layers required for the particular test sensor being manufactured.

Use of corona discharge is well known particularly in the printing industry to facilitate bonding of plastic materials to metals or other plastic materials, or to simply enable printing onto a plastic surface. To accomplish this, the liquid or ink being printed requires to 'wet' the surface of the substrate being printed upon. 'Wettability' depends on the surface energy, also referred to as the surface tension of the substrate. Surface modification pretreatment such as corona discharge can improve wettability of a material by raising the surface energy thereby facilitating adhesion properties by creating bonding sites. To obtain optimum adhesion, it is necessary to increase the surface energy of the substrate to just above that of the liquid or ink to be applied.

Corona treatment is an electrical process that uses ionized air to increase the surface tension of non-porous substrates i.e. corona treatment converts the surface from a non-polar state to a polar state. Typical corona treatment systems operate at electrical voltages in the region of 1 to 10kV. The high voltage of corona discharge causes the free electrons in air to accelerate and cause ionization. When the electric discharge is very strong, collisions of high velocity electrons with air molecules results in electron avalanching. When a material to be treated is placed in the path of a corona discharge, the electrons bombard the surface with energies up to 2 or 3 times greater than the energy required to break the molecular bonds of the material surface. Free radicals created in the presence of oxygen react rapidly to form functional groups on the treated surface. These functional groups are effective in increasing the surface energy of the treated material. Surface treatment with high voltage corona discharge modifies only the surface characteristics without affecting material bulk properties. Surface treatment using corona discharge is typically applied only to one side of the substrate material, however it will be apparent to a person skilled in the art that double-sided treatment is conceivable if required.

Corona discharge treatment differs from plasma discharge in that corona uses ionized air whereas plasma discharge involves the electrical ionization of a gas e.g. pure oxygen or nitrogen. Plasma discharge is also typically created at much lower voltage levels.

The compact design of commercially available corona discharge equipment, such as corona treatment unit 600 of Figure 6, enables easy installation to existing high-speed printing lines, such as the embodiment of a continuous web printing apparatus of Figure 4 without requiring significant modifications.

Substrate 404, such as Melinex® ST328 (manufactured by DuPont Teijin Films) may be supplied in a roll format nominally 350 microns thick by 370mm wide and approximately 660m in length. Substrate 404 may include an acrylic coating on one or both sides to improve ink adhesion. Preconditioning unit 406 may be used to precondition substrate material 404 at a sufficiently high temperature (up to 185 °C) so that in one example, irreversible stretch (approximately 0.7mm per artwork repeat) of the substrate is substantially removed, optionally while also under tension, prior to the substrate undergoing the printing process. Preconditioning the substrate material 404 improves stability and ensures that substrate 404 experiences minimum dimensional distortion during the web printing process. While polyester and indeed Melinex® are described in this embodiment, the use of other materials can be envisaged by those skilled in the art such as, for example, nylon, polycarbonate, polyimide, polyvinylchloride, polyethylene, polypropylene, PETG, or polyester. Variations in dimensions and thickness will also be apparent to those skilled in the art.

In one embodiment, substrate unwind unit 402 may be a Martin Unwinder/Automatic Splice, available from Martin Automatic Inc. in Rockford, IL. Preconditioning station 406, electrode print station 408, insulation print station 412, first enzyme print station 416 and second enzyme print station 420 may all be encompassed within a modified Kammann Printer, available from Werner Kammann Maschinefabrik Gmbh, model number K61, in Bunde, Germany, and indeed further modified to include a corona treatment unit 600 according to the present invention. Rewinder unit 424 may be a Martin Rewinder for example, available from Martin Automatic Inc. in Rockford, IL. While specific models of apparatus are provided as examples, these may be varied and/or replaced and/or omitted altogether without departing from the scope of the invention as will be understood by those skilled in the art.

The beneficial effect of corona discharge surface treatment can reduce with time if stored, therefore it is recommended to print or bond a substance onto the treated material soon after the corona discharge treatment. Figure 4 shows corona treatment unit 600 placed after the deposition of the carbon electrode and insulation layers of the test sensor (print stations 408 and 412) and immediately prior to the subsequent deposition of the enzyme layer(s) at print stations 416 and 420. This position in the sequence of events comprising a continuous web printing apparatus ensures that all surfaces to receive enzyme deposition are present and subjected to the corona discharge surface treatment prior to deposition of the enzyme layer.

**Figure 5** is a flow diagram 500 of the main process steps involved in the continuous web printing process 400 incorporating corona treatment of Figure 4. Firstly, a roll of substrate 404 is placed into printing apparatus 400 and unwound at unwind station 402, step 502. Next, substrate 404 is optionally pretreated, step 504. Then the carbon electrode layer is printed at station 408, step 506, followed by drying, step 508. Insulation ink in then printed upon the carbon layer, step 510, and again progresses through a drying station, step 512. At this point the printed substrate passes through a corona treatment unit 600 (described in detail in relation to Figure 6), step 514, prior to deposition of subsequent enzyme layers, step 516. A drying station typically follows each printing station, step 518, to ensure that ink deposited is sufficiently dry to accept a subsequent layer thereupon. Finally the printed substrate 404 is rewound and transferred for further processing, step 520.

Referring to Figures 4 and 5, as the test sensors are manufactured using a continuous web printing apparatus, it is convenient to implement corona discharge surface treatment as part of this continuous process, so that the characteristics of the surface are reproducible and ensured by the treatment process i.e. variation is not introduced by additional variables added to the manufacturing process.

The level of corona treatment can be controlled by varying the speed of travel of the web substrate, thereby controlling the time that the treated area is exposed to the corona discharge. Furthermore, the distance between the positive and negative electrodes of the corona discharge apparatus can be modified to optimize the level of treatment as described in Figure 6. Optimization of the process ensures that all cards of test sensors in a printed batch receive the same, uniform level of treatment.

Corona discharge apparatus 600 is placed within continuous printing apparatus 400 after the insulation drying station 414 and before the first enzyme printing station 416. This way, the treated surface is not exposed to organic solvent after treatment, and the treated surface immediately receives a layer of enzyme ink. Printing immediately after surface treatment maximizes the effect.

**Figure 6** is a perspective view of an example corona treatment unit 600 for surface treating printed substrate as part of the continuous web printing process described in relation to Figures 4 and 5. Corona treatment unit 600 includes a high frequency generator 602, a high voltage transformer 604, a power line 616, an ozone extraction pipe 618, an insulated electrode housing 606 with a pointed electrode therein (not seen), an air gap 'A', a flat electrode 608 connected to earth, a roller 610, pre-corona treatment printed substrate 612, post-corona treatment substrate 614, an arrow 'B' indicating the direction of movement of web substrate 612, 614 and an arrow 'C' indicating the direction of subsequent printing and processing of corona treated web substrate 614.

Corona discharge units such as the example shown in Figure 6 are commercially available, such as the CLN Corona Station available from Softal Electronics, Hamburg, Germany. In this example embodiment, printed substrate 612 enters corona treatment unit 600 in a direction indicated by arrow 'B'. Printed substrate 612 comprises a plurality of partially printed test sensors, such as test sensor 700 of Figure 7 for example.

Printed substrate 612 travels over flat electrode 608 through air gap 'A' situated directly beneath insulated electrode housing 606. Frequency generator 602 and high voltage transformer 604 communicate with insulated electrode housing 606 via power line 616. As printed substrate 612 passes through gap 'A' it is subjected to the intense electric field of corona discharge generated between a thin, pointed electrode located within insulated housing 606 and flat electrode 608 that is connected to earth. Post-corona treatment substrate 614 leaves corona treatment station 600 and progresses for further processing in a direction indicated by arrow 'C'.

A corona treatment station such as unit 600 of Figure 6 is capable of achieving an operating speed of up to 500m per minute, and the degree of pretreatment is controllable by varying the web speed and/or power rating of the corona discharge. Typical operating speeds according to the present invention are in the range of 2 to 20 metres per minute, with an operating power of around 0.5 to 2 kW. Ozone generated by the corona discharge treatment is removed by extraction pipe 618.

**Figure 7** is a top plan view of a partially printed test sensor 700 that receives corona discharge treatment as part of the continuous web printing process outlined in relation to Figures 4 to 6, including a bare substrate 702, a carbon electrode print 704, an insulation print 706 with an open rectangular channel 708 to define an area of carbon electrodes exposed to a fluid sample and an area of substrate 'S' located above the carbon print 104 at the entrance to capillary channel 710.

Figure 7 shows a partially printed test sensor 700, isolated from the continuous web of printed test sensors (items 612, 614 in Figure 6) to more clearly show the printed layers that are subjected to corona discharge at corona treatment unit 600. As seen in Figure 4, test sensor 700 progresses through pretreatment unit 406, carbon print station 408, first dryer 410, insulation print station 412 and second drying station 414 prior to reaching corona treatment unit 600. At this point in the continuous web printing process, test sensor 700 has received carbon print layer 704 and insulation print layer 706. As a nonlimiting example, insulation layer 706 may be Ercon E6110-116 Jet Black Insulayer Ink available from Ercon, Inc.

In one embodiment, corona treatment unit 600 provides a blanket treatment across the printed web 612 of Figure 6, subjecting all areas of test sensor 700 to the same level of surface ionization.

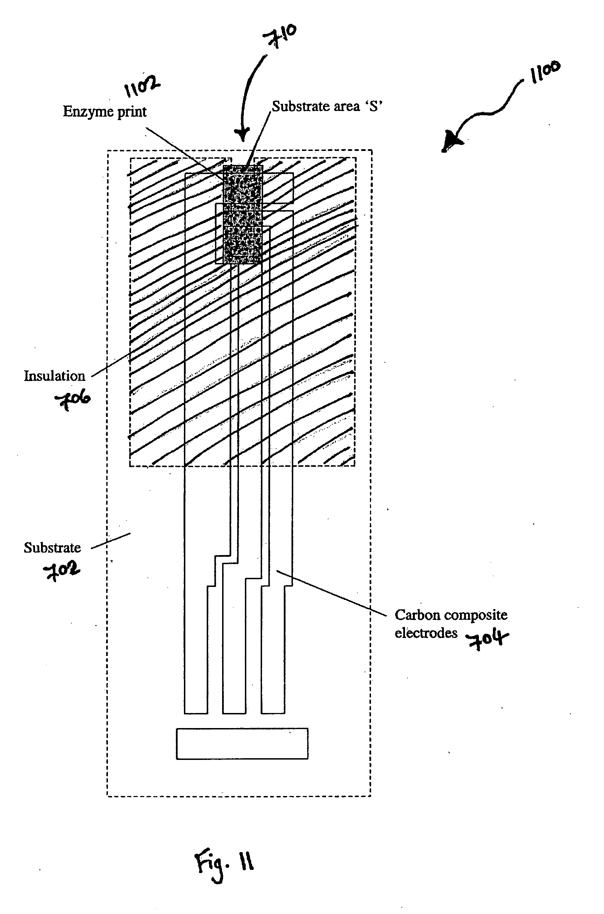

As described previously in relation to Figure 4, corona surface treatment improves adhesion of subsequent material deposition onto the treated surfaces. In Figure 7, exposed areas of substrate 702, carbon electrodes 704 and insulation 706 all receive corona discharge treatment when passed through corona treatment unit 600. The treated surfaces of substrate 602 including area 'S', carbon electrodes 604 and insulation 606 become modified by the corona discharge, and rendered more ready to accept subsequent deposition e.g. an enzyme layer at printing stations 416 and 420 of Figure 4. The position of enzyme layer 1102 is shown and described in relation to Figure 11.

**Figure 8** is a simplified cross-section view through corona treatment unit 600 of Figure 6 that forms part of the continuous web printing process of Figure 4, including a single pointed treating electrode 802 within an insulated electrode housing 606, a flat counter electrode 608, a high energy electric field 804 and a printed substrate 614.

In the example embodiment of Figure 8, corona treatment station 600 is designed around just two electrodes, a single, very thin, pointed treating electrode 802 and a flat, counter electrode 608 (typically at ground potential). Basically, corona discharge occurs when an electric current passes through an air gap between asymmetrical electrodes such as pointed electrode 802 and flat electrode 608. The example embodiment of a corona treatment unit 600 provided is typically open to the atmosphere, allowing ambient air into gap 'A'.

An intense electric field 804 is generated by application of a high voltage between pointed treating electrode 802 located within insulated housing 606, and flat counter electrode 608. The corona discharge is sustained between treating electrode 802 and flat electrode 608 by establishment of such a high potential difference there between. Ceramic insulator assemblies are typically present to ensure insulation of the high voltage corona. Corona discharge at frequencies of 15 to 25 kHz provides high efficiency energy transfer as electrons oscillate in air gap 'A' between the asymmetric electrodes. As substrate 614 passes through corona treatment unit 600, at a speed of approximately 10 metres per minute, the surface layer is ionized, thereby increasing the surface tension. The top layer may 'spark' as the molecular bonds break, leaving the carbon electrode surface exposed virtually free of chemistry inhibiting polymer.

This method of surface treatment is based on the principle of high voltage discharge through air or alternatively under vacuum pressure, and provides a uniform treatment of materials passing through the discharge area. Corona treatment units such as the example provided in Figure 6 may be able to treat substrates at a rate of up to 500 metres per minute.

**Figure 9** is a simplified cross-section view through a further example embodiment of a corona treatment unit 600 forming part of the continuous web printing process of Figure 4, including a plurality of pointed electrodes 902 within an insulating electrode housing 606, a flat electrode 608, a high energy electric field 904 and a printed substrate 614.

The example embodiment of a corona treatment unit 600 of Figure 9 optionally comprises the same number of pointed, treatment electrodes 902 as the number of rows of test sensors on each card being processed through the continuous web printing apparatus. Segmented treatment electrodes 902 or multi-blade electrodes may optionally be used for corona discharge treatment of individual rows of test sensors. In this type of system, the corona power is distributed over a number of parallel electrodes to obtain an even corona with many small sparks. This may be more efficient than the regular single treatment electrode 802 described in relation to Figure 8.

Referring now to Figures 8 and 9, exposure of conductive carbon electrodes to corona discharge treatment may induce further arching of the corona discharge therefore it is conceivable that ceramic electrodes may be used to limit the amount of unnecessary arching.

**Figure 10** is a close-up cross-section view 1000 through carbon electrode layer 704 of Figure following exposure to corona discharge according to the present invention, including carbon particles 304, graphite particles 306, a polymer 308 and a top surface 1002.

The cross-section view 1000 through carbon electrode 704 of Figure 10 (post corona treatment) is similar to the cross-section view of Figure 3 (pre-corona treatment), however there is a substantial difference in the surface characteristics between them. The close-up view of Figure 10 shows carbon 304 and graphite particles 306 clearly exposed at surface 1002 i.e. there is no thin layer of polymer material covering the carbon particles.

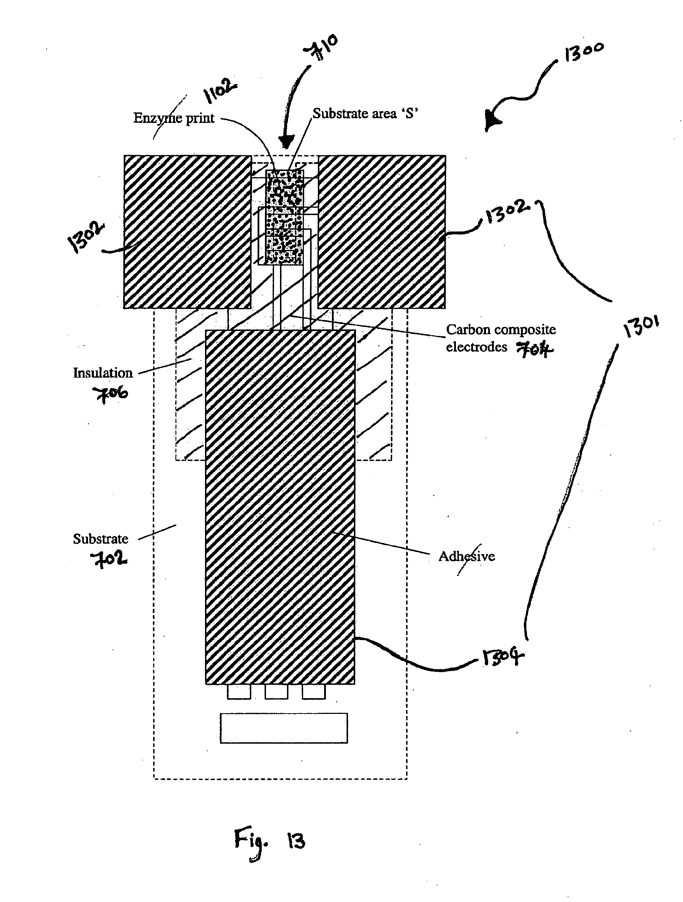

The electrochemical surface area of a carbon electrode is represented by the portion of carbon electrode 704 that contributes to the oxidation of the mediator. Graphite 306, carbon black 304 and polymer 308 e.g. resin, have varying degrees of conductivity and therefore influence the proportion of the geometric electrode area that can participate in the oxidation of a mediator. This geometric area represents the area of carbon electrodes 704 that are exposed to a liquid sample e.g. blood within the capillary channel that can be seen more clearly in Figure 13. Typically, the current output of a glucose biosensor is directly proportional to the electrochemical surface area. Careful selection of an appropriate polymer and ensuring that sufficient solvent is removed from the carbon ink during initial drying can optimize the stability of carbon electrodes 704, however a thin film 312 of polymer can remain at the surface of the carbon electrodes 704 as shown and described in relation to Figure 3.

Corona treatment unit 600 shown in detail in Figure 6 and as part of a continuous web printing process of Figure 4, has the effect of removing thin layer 312 of polymer material from the surface of carbon electrode 704. Removal of thin layer of polymer 312 from carbon electrode 704 creates surface 1002 whereby the top layer of polymer 308 is removed or carbonized by the corona discharge treatment leaving clean carbon particles 304 exposed at surface 1002 of carbon electrode 704. Treatment by corona discharge is relatively fast, in the order of 1 second, therefore it only changes the surface characteristics and does not affect the bulk of the carbon ink.

Fast exposure of a material to a high energy density environment such as corona discharge removes the more unstable components from the surface e.g. polymer 308 in this example, and/or any other component absorbed by the carbon ink during the printing and drying process. Exposing the carbon composite of carbon electrodes 704 to corona discharge leaves graphite 306 and carbon black particles 304 exposed at surface 1002 thereby enhancing the electrochemical properties of the conductive carbon electrodes. In addition, as the high energy density corona discharge oxidizes the exposed materials, a more hydrophilic surface is produced that facilitates adhesion of the subsequent enzyme layer.

Selectively removing a component of the carbon composite electrode layer i.e. the polymer 308 component changes the material composition of the top layer of the carbon electrodes. This was found to enhance the electrochemical properties of the test sensors as well as providing enhanced performance around the lower range of operating temperatures.

**Figure 11** is a top plan view of a test sensor 1100 that has undergone corona treatment according to the present invention, and has received subsequent deposition of an enzyme layer 1102. Test sensor 1100 includes all the same elements as test sensor 700 of Figure 7 with the addition of enzyme layer 1102. Examples of possible reagent formulations or inks that may be used for enzyme layer 1102 can be found in US patents US5708247 and US6046051; published international applications WO01/67099 and WO01/73124, all of which are incorporated by reference herein.

Deposition of enzyme 1102 occurs after corona treatment unit 600 of continuous web printing apparatus 400 of Figure 4. In the example embodiment of Figure 4, a first enzyme layer 1102 is deposited at printing station 416. The printed substrate then passes through drying station 418 before a second enzyme layer is optionally deposited over the first at print station 420.

Reliable functioning of electrochemical test sensors such as test sensor 100 of Figure 1, requires that enzyme layer(s) 1102 be printed over the carbon electrodes 704, substrate 702 including area 'S', and insulation ink 706 as shown in Figure 11. Corona treatment of test sensor 700 increases the wettability or surface tension of the surface areas exposed i.e. substrate 702 including area 'S', carbon electrodes 704 and insulation layer 706. Corona treatment of test sensor 700 (Figure 7) therefore substantially improves the adhesion of enzyme ink 1102 to the carbon electrodes 704, insulation ink 706 and substrate 702 including area 'S' enhancing the adhesion of the enzyme layer around the entrance to capillary channel 710.

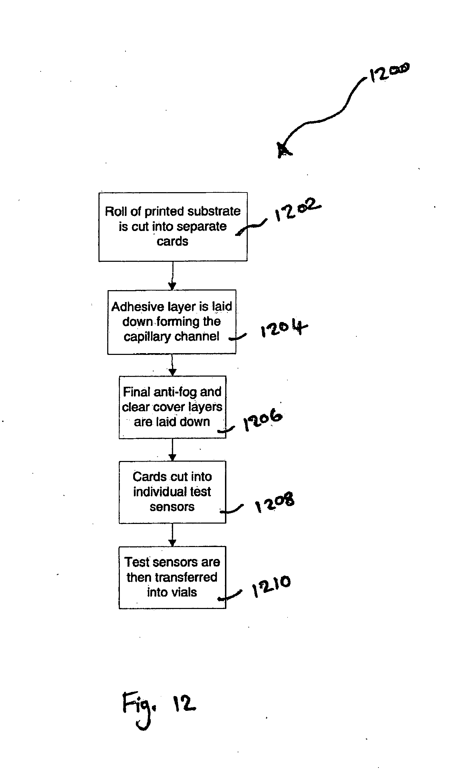

**Figure 12** is a flow diagram 1200 of the remaining process steps involved in the manufacture of electrochemical test sensors. In one embodiment, the continuous web printing apparatus of Figure 4 may only partially manufacture test sensors according to the present invention. The remaining process steps are outlined in Figure 12.

After passing through the web printing apparatus of Figure 4, the roll of printed substrate is removed and transferred for further processing. First, the roll of printed substrate is cut into cards, step 1202. Cards of test sensors typically comprise approximately 500 individual test sensors. Next, an adhesive layer (item 110 in Figure 1) is applied, step 1204, followed by lay down of a hydrophilic film and final cover layer (items 112 and 114 in Figure 1) step 1206. Each card of test sensors is then cut into individual test sensors, step 1208, and finally a predetermined number of test sensors is then placed into a form of packaging such as a desiccated vial, step 1210.

**Figure 13** is a top plan view of a test sensor 1300 that is equivalent to test sensor 1100 of Figure 11, now showing the addition of an adhesive layer 1301, comprising adhesive pads 1302 and an adhesive stripe 1304.

Adhesive layer 1301 may be a pressure sensitive adhesive such as a water-based acrylic copolymer adhesive, available from Apollo Adhesives for example, deposited on three sides of enzyme layer 1102. The example embodiment of Figure 13 shows adhesive layer 1301 comprising two adhesive pads 1302 and an adhesive stripe 1304. After drying, adhesive layer 1301 forms a spacer of approximately 150µm in height, thereby defining three sides of sample capillary channel 710. Application of a hydrophilic film 112 (such as 3M 9962, a 100 micron thick surfactant-treated optically clear polyester film for example) and cover layer 114 as seen in Figure 1, form the fourth and final side of the sample receiving capillary chamber 710.

Corona treatment of test sensor 700 of Figure 7 increases the surface tension of all components exposed, thereby improving adhesion of subsequent materials. Corona treatment therefore enhances the adhesion of adhesive layer 1301 to insulation layer 706 and exposed substrate 702 to form part of capillary channel 710. According to one embodiment of the present invention, the components comprising capillary channel 710 i.e. adhesive layer 1310 and hydrophilic layer 112 are not present at the time of the corona treatment.

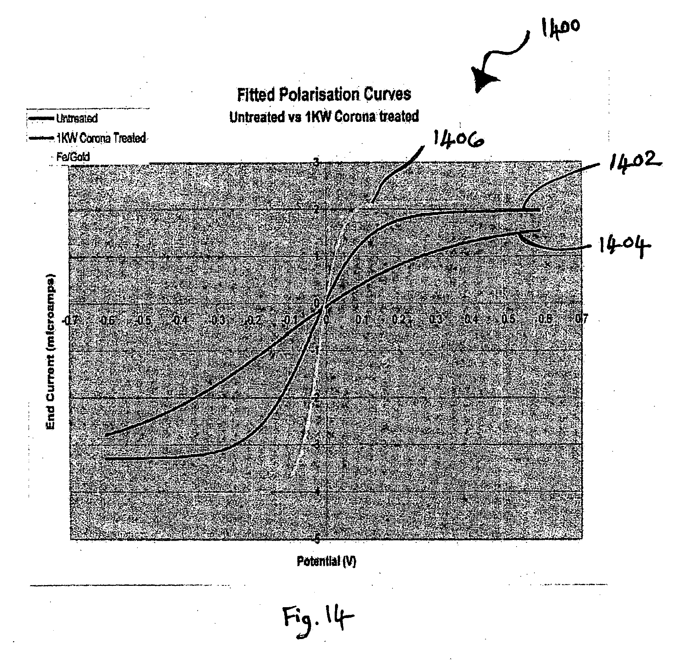

**Figure 14** is a plot of fitted polarization curves 1400 comparing screen-printed carbon electrodes with corona treatment 1402 according to the present invention, against the polarization curve obtained from a carbon electrode without exposure to corona treatment 1404, and also a polarization curve of a gold electrode 1406.

Figure 14 shows the effect that corona discharge treatment has on the polarization curve of printed carbon electrodes. Taking the polarization curve of a gold electrode 1406 to be an "optimal" polarization curve, a corona treated carbon electrode provides a polarization curve 1402 that is substantially closer to this optimal curve than the curve obtained from an un-treated carbon electrode. This improvement in polarization is due to the removal of the thin layer of polymer material that resides at the surface of the conductive carbon electrode during the screen-printing process.

A first advantage of using corona discharge surface treatment in the manufacture of electrochemical test sensors according to the present invention is removal of a component of a carbon composite screen-printed electrode i.e. polymer resin in the example provided herein. Removal of a thin film of insulating material from the surface of the conducting carbon electrodes substantially improves the electrochemical properties during their use in analyte detection and measurement.

Incorporating blanket corona treatment at a specific point in the manufacture of test sensors provides a further advantage of the present invention. Corona treatment increases the wettability or surface tension of the materials exposed, improving adhesion of enzyme ink to printed carbon, insulation ink and substrate polymer material. Improved adhesion of enzyme ink to the substrate virtually eliminates the possibility of the enzyme ink peeling away at the entrance to the capillary channel during the singulation procedure.

Furthermore, corona treatment of the insulation ink improves the subsequent adhesion of the adhesive layer that is an important component in the formation of the capillary channel structure.

It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A method of manufacturing test sensors for use in the detection or measurement of body fluid analytes, such as blood glucose, said method comprising the steps of:
providing an insulating substrate;
applying a layer of carbon composite ink onto said insulating substrate to form one or more electrodes;
treating exposed surface areas of carbon, insulation and substrate with high energy density corona discharge, said corona discharge having an energy density sufficient to improve the electrochemical properties of said test sensor by selectively removing polymer resin from the surface of the carbon composite electrodes; and
depositing said enzyme ink over a defined region of the printed substrate.

2. A method of manufacturing test sensors for use in the detection or measurement of body fluid analytes, such as blood glucose, said method comprising the steps of:
providing an insulating substrate;
applying a layer of carbon composite ink onto said insulating substrate to form one or more electrodes;
treating exposed surface areas of carbon, insulation and substrate with high energy density corona discharge, said corona discharge having an energy density sufficient to increase the hydrophilicity of the surface of the carbon composite electrodes; and
depositing said enzyme ink over a defined region of the printed substrate.

3. A method according to Claim 2 wherein said corona discharge removes an insulating polymer from the surface of said electrode.

4. A method according to Claim 2 wherein said substrate forms part of a continuous web of substrate.

5. A method according to Claim 2 wherein said corona discharge forms a blanket treatment across the printed substrate.

6. A method of selectively increasing the hydrophilicity of a screen-printed substrate, said method comprising the steps of:
printing a layer of conductive electrode material onto a web of substrate;
printing a layer of insulation ink over said electrode layer;
applying high energy density corona discharge to exposed regions of electrode, insulation and bare substrate materials;
depositing enzyme ink over a predefined region of corona treated electrode, insulation and substrate materials; and
applying a layer of adhesive material to form a capillary channel.

7. A method of improving the electrochemical properties of a test sensor, said method comprising the steps of:
providing a substrate;
applying a layer of carbon composite material on said substrate forming at least one electrode;
applying a layer of insulation ink over a defined region of carbon electrode layer and substrate;
treating the test sensor with corona discharge;
applying a layer of enzyme ink;
applying a layer of adhesive material to substantially form a capillary channel;
wherein the corona treatment selectively removes a component of the carbon composite material from the surface thereof.

8. A method according to Claim 7 wherein wherein said component is an insulating polymer.
